# EUROPEAN PATENT SPECIFICATION

(11) **EP 2 097 260 B1**
(45) Date of publication and mention of the grant of the patent: **21.07.2010**
(21) Application number: 07862617.3
(22) Date of filing: 07.12.2007
(51) Int. Cl.: B41C 1/05, B23K 26/36

(54) **DIRECT ENGRAVING OF FLEXOGRAPHIC PRINTING PLATES**
DIREKTGRAVUR VON FLEXODRUCKPLATTEN
GRAVURE DIRECTE DE PLAQUES D'IMPRESSION FLEXOGRAPHIQUES

(30) Priority: 22.12.2006 US 615025
(43) Date of publication of application: 09.09.2009
(73) Proprietor: Eastman Kodak Company, Rochester NY 14650-2201 (US)
(72) Inventor: SIMAN-TOV, Alon, Or-yehuda (IL); CHAYET, Haim, 74039 Nes Ziona (IL)
(74) Representative: Weber, Etienne Nicolas
(86) International application number: PCT/US2007/025055
(87) International publication number: WO 2008/088504

(56) References cited:
- DE-A- 10 105 979
- US-A- 6 150 629
- US-A1- 2001 052 924
- US-A1- 2006 132 592
- US-A1- 2006 203 861

## Description

### FIELD OF THE INVENTION

This invention relates to an apparatus for 3-D direct engraving of flexographic printing plates.

### BACKGROUND OF THE INVENTION

Direct engraving of a flexography plate requires carving three dimensional (3-D), on plate material, directly with a laser system. This is remarkably different from two dimensional (2-D) imaging techniques that require post processing steps to produce the 3-D features.

This difference introduces several challenges for the laser imaging system:
1. The laser system must have sufficient power to ablate the material; and
2. The laser spot should be small enough to achieve the fine detail required in quality printing.
Although high power density does not necessary conflict with laser focusability, from a practical perspective, these lasers offer significantly higher cost per watt of output optical power than broad spot lasers. As a result, it is desirable to operate with broad laser sources, that may produce high output optical power, rather than with small spot sources, that may have high power density but relatively low total power output.

It is therefore appealing to use a laser system that combines the characteristics of a fine spot laser source to process areas which require fine detail screening and a broad spot laser source for portions of the image where features comprise large solid areas.

U.S. Patent No. 6,857,365 to Juffinger et al provides a method of producing a printing block by introducing a relief is into a surface of a printing block blank. To form the relief, material of the printing block blank is removed along tracks by radiation. The relief regions may be formed at different depths along one and the same track by frequent exposure to radiation by radiation sources mounted on the same optical head.

U.S. Published Application No. 2006/0065147 to Ogawa provides a method of engraving a flexo direct printing plate in two processes. One is a precision engraving process for irradiating the flexo direct printing plate at a precision engraving pixel pitch with a precision engraving beam having a small diameter, to engrave the plate to a maximum depth. The other is a coarse engraving process for irradiating the flexo direct printing plate at a coarse engraving pixel pitch larger than the precision engraving pixel pitch, with a coarse engraving beam having a large diameter, to engrave the plate to a relief depth. A variable beam expander changes the diameter of the laser beam emitted from the single laser source.

U.S. Patent No. 6,150,629 to Sievers provides a laser engraving machine used for engraving a workpiece surface by a modulated laser beam in order to form a desired profile in the workpiece surface. The fine structures of the profile are formed by the laser beam of a first laser which is modulated by an acoustooptic modulator with relatively high modulation frequency, while the deep areas of the desired profile are formed by the laser beam of a second laser, for which purpose the modulator, on the one hand, and the second laser beam source, on the other hand, are driven by interrelated but separate control signals. The two perpendicular polarized laser beams from the modulator and the second laser beam source are transmitted and reflected by a selective mirror, respectively, and applied commonly via a single optical system to the workpiece surface to be machined.

U.S. Published Patent Application No. 20060132592 to Sievers provides for the transferring of an image by the combined flux from two or more beams of light. Particular embodiments ablate the mask printing plates for CTP systems by the combined illumination from a first, broad beam and a plurality of controllable, pulsed beams that co-illuminate the plate with the first beam.

U.S. Published Patent Application No. 20060203861 to Ogawa provides a laser engraving machine having a recording drum rotatable with a flexo sensitive material mounted peripherally thereof, and a recording head movable parallel to the axis of this recording drum. The recording head includes a first laser source for emitting a precision engraving beam L1, a second laser source for emitting a coarse engraving beam L2, an AOM for modulating the precision engraving beam L1, an AOD for causing the precision engraving beam L1 to scan axially of the recording drum, an AOM for modulating the coarse engraving beam L2, a synthesizing device, and an optic for condensing the precision engraving beam L1 and coarse engraving beam L2 synthesized by the synthesizing device on the flexo sensitive material.

DE 101 05 979 A1 discloses a device and a process for the treatment of a material with laser beams, in particular for the ablation of flexographic printing plates by laser engraving with a multi-spot-array, with which the material is scanned point by point at the same time by laser beams bundles from laser light sources. U.S. Published Patent Application No. 2001/0052924 discloses two radiation sources, which can be used simultaneously. The first source is a laser source adapted to remove a first layer (laser sensitive layer), from a flexographic plate. The previously-removed first layer region is subsequently irradiated with a UV light source.

### SUMMARY OF THE INVENTION

The present invention is a radiation system that combines the characteristics of a fine spot radiation source to process areas that require fine detail screening and a broad spot radiation source to process areas that comprise large substantially solid areas.

In particular, the present invention is a system for engraving flexographic printing plates as defined in claim 1. Specific embodiments of the invention are defined in the dependent claims.

### BRIEF DESCRIPTION OF THE DRAWINGS

Figure 1 is a diagram showing blank and elevated ink transfer areas on a flexographic plate;
Figure 2 is a diagram showing a flexographic plate pressed against a surface;
Figure 3 is a diagram of the Hybrid Optical Head concept arranged on two separate optical carriages;
Figure 4 is a diagram of the Hybrid Optical Head concept arranged on one carriage;
Figure 5 shows a fiber coupled diode imaged by an optical system onto the flexographic plate;
Figure 6 is a diagram showing a plurality of fiber coupled diode lasers and fibers arranged in an array and imaged onto the flexographic plate by a telecentric lens;
Figure 7 is a diagram showing a collimating lens collimating the radiation from a diode laser;
Figure 8 is a diagram showing radiation from a coupled diode laser being collimated and imaged onto the flexographic plate;
Figure 9 is a diagram showing a plurality of coupled diode lasers being individually collimated and imaged onto the flexographic plate;
Figure 10 is a diagram of a fast and slow axis collimation of a semiconductor laser bar;
Figure 11 is a diagram of fast vertically and horizontally stacked laser bars; and
Figure 12 is a diagram showing beam combination by using a polarization beam combiner.

### DETAILED DESCRIPTION OF THE INVENTION

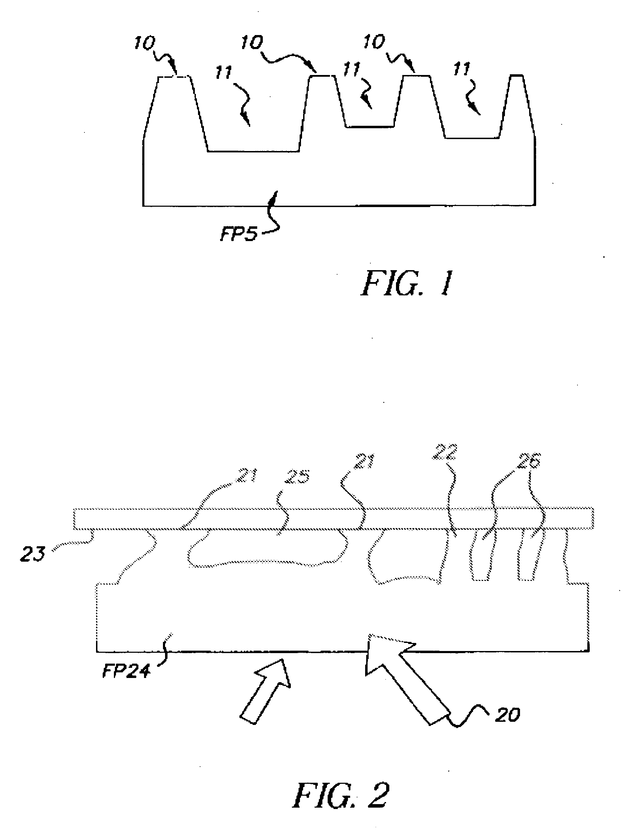

The combination of radiation sources with high power broad spots and low power fine spots, referred to as a Hybrid Optical Head System (HOHS), is well suited for 3-D processing of direct engraving flexography applications. Referring to FIG. 1, because a flexographic plate (FP) 5 is pressed directly onto printed media, such as, for example, paper, packaging material and the like (not shown), areas 10 that transfer ink to the printed media need to be elevated from blank areas 11 which do not transfer ink. The required depth of the blank areas 11 is such that when the FP 5 is pressed against another surface, the blank areas 11 should be kept out of contact with the surface.

Referring to FIG. 2, FP 24 is being pressed firmly against contact surface 23 by pressure 20. Because FP 24 is deformable, imaging features 21 separated by large blank area 25 (typically used to produce large solid areas in imaging) will be deformed more strongly and pushed closer to contact surface 23 than imaging features 22 that are separated by small blank area 26 (typically used to produce fine detail areas in imaging). Therefore, large blank area 25 must maintain greater depth than small area 26 to prevent contact with the contact surface 23. Therefore, it follows that small blank area 26 may be engraved by the radiation system to a shallower depth than that required for large blank area 25. The HOHS takes advantage of the fact that large solid areas need to be processed to a depth which is greater than that required for fine detail.

The HOHS may be configured with at least two groups of radiation sources, the groups comprising at least one radiation source, wherein the radiation sources within the groups emit radiation having the same intensity and spot size, different from the intensity and spot size of radiation sources in other groups, wherein the groups of radiation sources are operating simultaneously. Radiation sources include, but are not limited to, lasers, laser diodes, multi emitter laser diodes, laser bars, laser stacks, fiber lasers and the like. For example, a lower power fine laser source may assist in processing solid areas; however, a high power broad laser source may only operate in areas that are greater than or equal to its spot size. The laser sources, fine and broad, may be integrated into a single optical head, or separated into their own separate mounted heads. In each configuration, the laser sources are controlled and driven independently of each other.

The HOHS may, for example, utilize one of the following sources:
1. Fiber coupled single emitter diode laser of 100 micro meter aperture capable of emitting 6.5 W, such as those available from JDSU: Laser Diode, 9xx nm, Fiber-Coupled, 6.5 W. Description is available at: http://www.jdsu.com/index.cfin?productid=605&pagepath=Pro ducts/Commercial_Lasers/Products/Laser_Diodes&id=2008) This particular JDSU laser source may be imaged to a fine spot in the order of tens of micrometers depending on the imaging optics, without seriously compromising focus depth.
2. A semiconductor bar that can provide tens of watts of output power. Array or stack of several bars can provide hundreds of watts into a large spot. A single bar is capable of producing a 400-micrometer spot without a significant compromise in focus depth. Additionally, a single bar may engrave coarse features to significant depth within a short exposure time.

A fine laser source, or a multiplicity of fine laser sources, may comprise diode lasers having a single emitter, such as, for example:

Laser Diode, 9xx nm, Fiber-Coupled, 6.5 W. Available from: JDSU (http://www.jdsu.com/index.cfm?productid=605&pagepath=Products/Commercial_ Lasers/Products/Laser_Diodes&id=2008).

Both fine and broad source lasers are available in a fiber-coupled and non-fiber-coupled configurations. In the fiber- coupled configuration, the laser is coupled to a fiber using a separate focusing lens or a lens defined by processing the fiber end to a surface capable of refracting the light into the fiber. The size of the aperture emerging from the fiber is determined by the radial dimension of the fiber. Since the light that is output from the aperture diverges, it needs to be imaged by using a lens, or system of lenses, to result in the desired spot size.

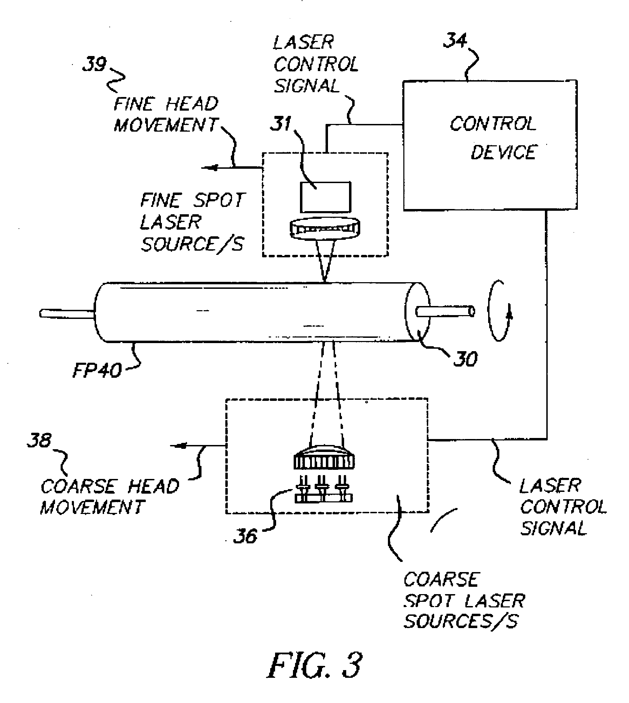

Figure 3 illustrates one embodiment of a HOHS where fine laser source 31 and broad laser source 36 are mounted on carriages 39 and 38, respectively, which move along the longitudinal axis of a rotating drum 30 on which FP 40 is mounted. Laser sources 31 and 36 are controlled by control device 34 and carriages 39 and 38 may be placed independently of each other, at different locations with respect to the rotating drum 30.

In operation, FP 40 is attached to drum 30 and then spun. While spinning, control device 34 directs laser source 36 to ablate certain large areas that are greater than or equal to the spot size of the laser source 36; while laser source 31 is directed to ablate certain small areas, areas requiring fine detail and large areas where laser source 31 is directed to operate. Laser sources 31 and 36 are moved on their respective carriage 39 and 38, respectively, so as to locate the laser sources 31 and 36 in the area where they need to operate.

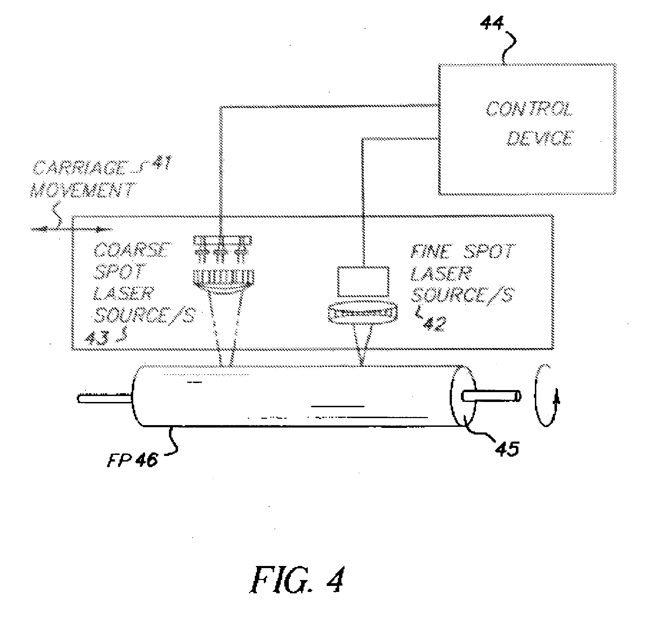

Figure 4 illustrates another embodiment of the HOHS where fine laser source 42 and broad laser source 43 are mounted on the same carriage 41. Lasers 42 and 43 are controlled independently by controller device 44, according to the data containing details of the image, for engraving on FP 46 mounted on drum 45.

In operation, FP 46 is attached to drum 45 and then spun. While spinning, control device 44 directs laser 43 to ablate certain large areas that are greater than or equal to the spot size of the laser 43; while laser 42 is directed to ablate certain small areas, areas requiring fine detail and large areas where laser 42 is directed to operate. Laser sources 42 and 43 are moved on carriage 41 so as to locate the lasers 42 and 43 in the area where they need to operate.

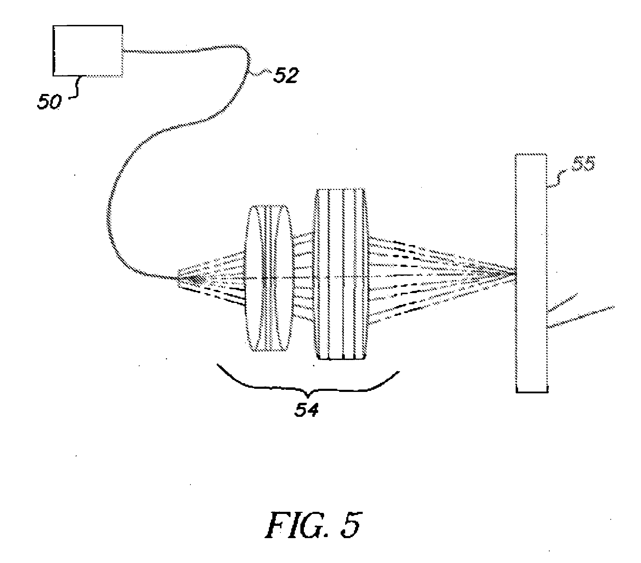

Figure 5 illustrates a fiber coupled diode laser 50 coupled to fiber 52, fiber 52 coupled to imaging optical system 54 which achieves a spot of desired dimension to focus and engrave on the engraved media 55. The fiber 52 in this embodiment may be a single mode laser source, multimode fiber or bundle of fibers for a multimode laser source.

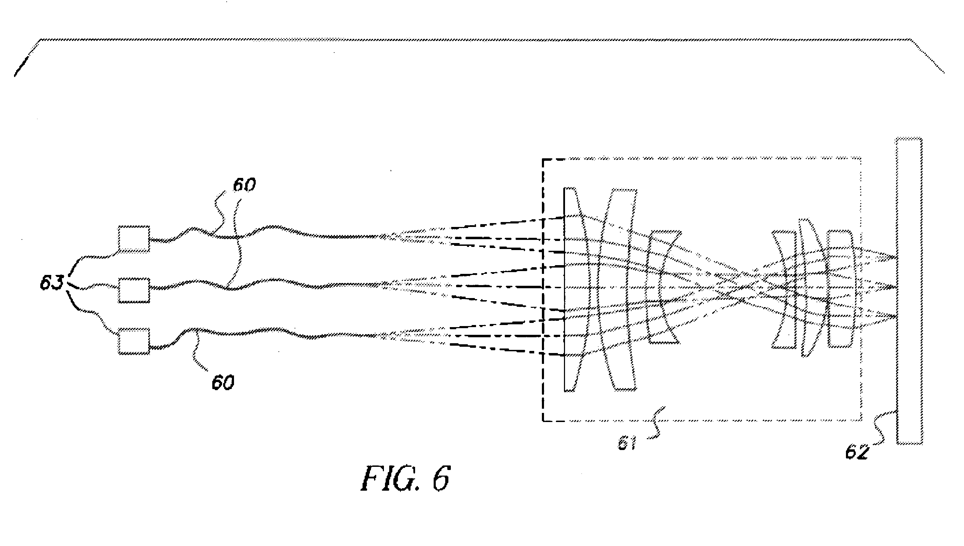

Figure 6 describes another embodiment wherein a multiplicity of fiber coupled diode lasers 63 are used. The fibers 60 are arranged in an array and can be imaged by a lens or system of lenses 61 on the engraved media 62. In an example, the system of lenses 61 may be configured as a telecentric lens.

In another example, the diode laser 63 or multiplicity of diode lasers 63 may be other than fiber coupled diodes. The beam emitted from a diode laser spreads out as it leaves its front facet and needs to be captured by a lens positioned in close proximity to the emitter. Very often the light leaves the lens collimated, namely, propagating along the optical axis with minimum divergence. The collimating lens may include a single lens element or several elements. In case the laser diode 63 is other than fiber coupled, additional elements are required for producing circular beam profile.

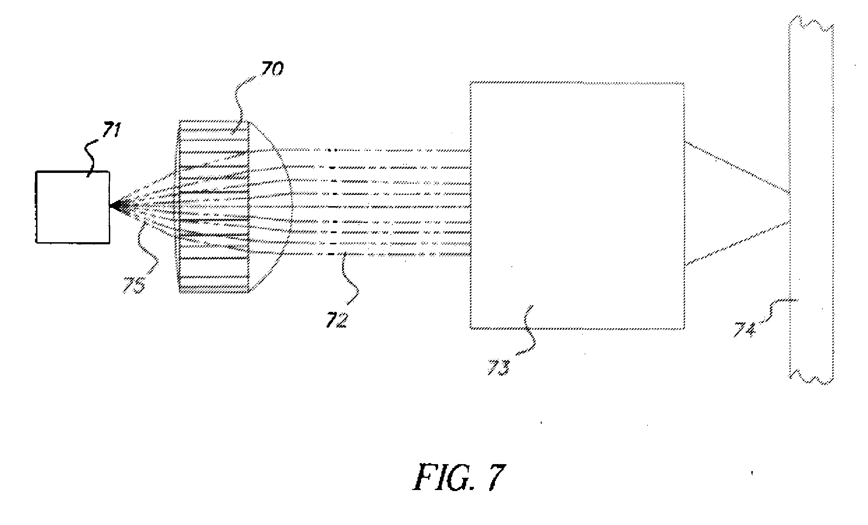

Figure 7 depicts laser beam 75 emitted from diode laser 71 and collimated with collimating lens 70. A subsequent optical system 73 may be placed in the path of beam 72 to image the beam on engraved media 74. The optical system 73 may also include elements for shaping the laser beam 72 that emerges from the collimating lens as a circle. The laser beam 75 emerging from a laser diode has an elliptical cross section by nature.

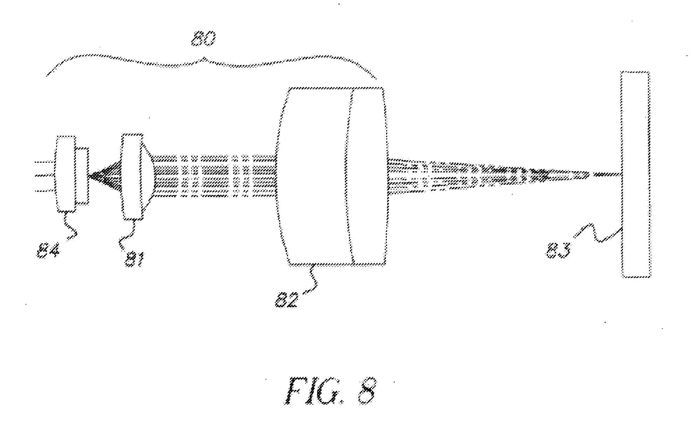

Figure 8 shows non-fiber coupled diode optics 80, including diode laser 84, collimating lens 81 and imaging lens 82 for imaging on engraved media 83.

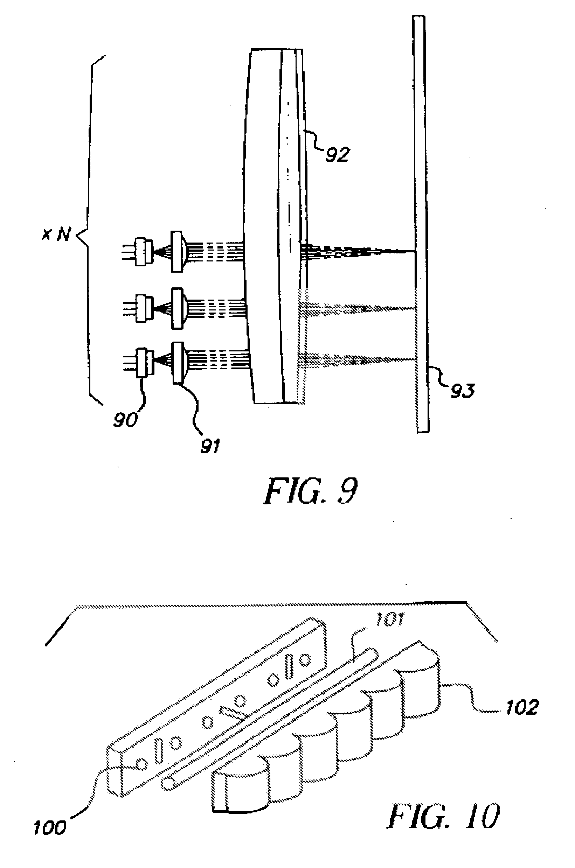

Figure 9 shows one or more diode lasers 90 formed in a well-defined array. As with the case of a single diode laser, light from each diode 90 is captured by a respective collimating lens 91. Light from the array of collimated lenses 91 is captured into the imaging lens system 92 and then imaged on the engraved media 93.

A broad laser source can be constructed from fiber coupled or non-fiber coupled semiconductor laser bars or stacks such as available for example from: http://www.dilas.de/products/products.html, as well as from: http://www.scd.co.il/lapid.asp

A laser bar emits light from a relatively large area, the width of which is typically 10 or 12 mm, and consists of an array of sub emitters. The total output power of a bar reaches 50 Watts or more.

Figure 10 describes a laser bar 100 with multiple emitters. In order to collimate light, the optical system consists of a lens 101 that collimates the fast axis of the angular span of 65 degrees, and an additional lens 102 that collimates the slow axis, it contains cylindrical elements in front of each individual emitter.

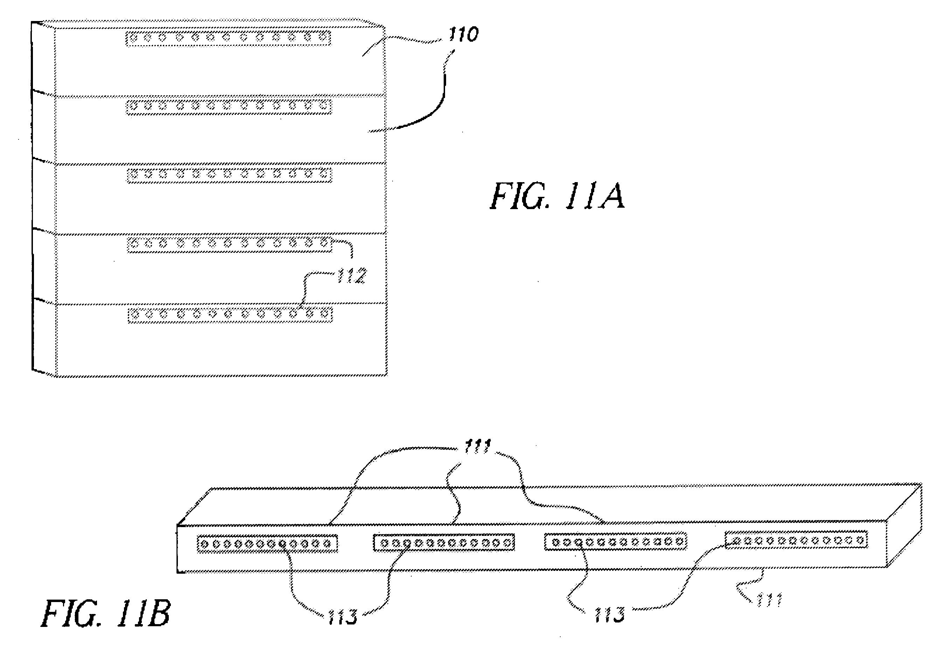

Figure 11A shows several bars 110 that are coupled vertically and Figure 11B shows several bars 111 that are coupled horizontally. Each bar 110 and 111 is configured with an array of emitters 112 and 113, respectively. The output power generated by bars 110 is the sum of the output powers generated by all individual bars. The bars 110 and 111 may be individually addressable.

Optical elements such as polarization and/or wavelength dependent beam combiners can be further used to combine the light from several such laser devices in order to increase the brightness of the broad laser source. The light emitted from these bars can be coupled by utilizing various micro-optical elements into fibers or a bundle of fibers. The fiber coupled or non-fiber coupled source is then imaged to a desired spot size, which is broad relative to the fine spot. This laser spot is then used to ablate the coarse structure of the flexographic printing plate to the required relief.

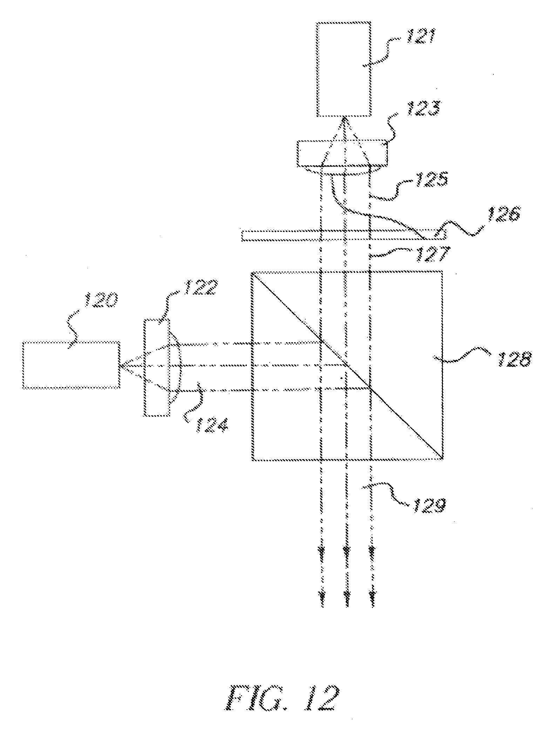

An example of combining light polarization is described in figure 12. The laser beam 124 is a collimated laser beam from laser source 120 coupled to collimating lens 122. The beam enters to polarizing beam combiner (PBC) 128. The orientation of the PBC and laser source 120 is such that the output from PBC is at right angles to its original direction.

The beam 125 from laser source 121 coupled to collimating lens 123 is similar to laser beam 124. The beam 125 enters polarization half wavelength retarding waveplate 126. The emerging beam 127 has its state of polarization rotated by 90 degrees. By entering the PBC 128, beam 127 is transmitted and combines with beam 124 to form the combined output beam 129.

When using laser diodes that emit light at different wavelengths, the light sources may be tailored to the special optical and thermal characteristics of a direct engraving printing plate, such as the printing plate described in co-owned U.S. Patent Application No. 11/353,217.

### PARTS LIST

- 5: flexographic plate
- 10: ink transfer areas
- 11: blank areas
- 20: pressure
- 21: imaging features
- 22: imaging features
- 23: contact surface
- 24: flexographic plate
- 25: large blank areas
- 26: small blank areas
- 30: rotating drum
- 31: fine laser source
- 34: control device
- 36: broad laser source
- 38: carriage
- 39: carriage
- 40: flexographic plate
- 41: carriage
- 42: fine laser source
- 43: broad laser source
- 44: controller device
- 45: drum
- 46: flexographic plate
- 50: diode laser
- 52: fiber
- 54: imaging optical system
- 55: engraved media
- 60: fibers
- 61: system of lenses
- 62: engraved media
- 63: diode lasers
- 70: collimating lens
- 71: diode laser
- 72: laser beam
- 73: optical system
- 74: engraved media
- 75: laser beam
- 80: optics
- 81: collimating lens
- 82: imaging lens
- 83: engraved media
- 84: diode laser
- 90: diode lasers
- 91: collimating lens
- 92: lens system
- 93: engraved media
- 100: laser bar
- 101: lens
- 102: additional lens
- 110: bars
- 111: bars
- 112: emitters
- 113: emitters
- 120: laser source
- 121: laser source
- 122: collimating lens
- 123: collimating lens
- 124: laser beam
- 125: beam
- 126: retarding wave plate
- 127: emerging beam
- 128: polarizing beam combiner
- 129: output beam

## Claims

1. A system for 3-D engraving flexographic printing plates (5), comprising:
a first group (31, 42) of two or more diode lasers, each emitting radiation having substantially the same intensity, wherein the diode lasers are arranged in an array (63, 90, 100, 110, 111, 112, 113);
a first two or more optical elements (54, 61, 91, 92) coupled to the first group of two or more diode lasers for imaging the radiation emitted from the first group of two or more diode lasers onto a flexographic printing plate;
a second group (36, 43) of two or more diode lasers each emitting radiation having substantially the same intensity, wherein the diode lasers are arranged in an array (63, 90, 100, 111, 112, 113); and
a second two or more optical elements (54, 61, 91, 92) coupled to the second group of two or more diode lasers for imaging the radiation emitted from the second group of two or more diode lasers onto the flexographic printing plate, wherein the intensity and spot size of the first group of two or more diode lasers is different from the intensity and spot size of the second group of two or more diode lasers, and wherein the first and second groups of diode lasers are mounted on a carriage means (38, 39, 41) which moves along the longitudinal axis of a rotating drum (30, 45) on which the flexographic printing plate is mounted, and wherein the first and second groups of diode lasers are controlled by a control device (34, 44) to be placed independently of each other at different locations with respect to the rotating drum (30, 45) for engraving on the flexographic printing plate in operating simultaneously.

2. The system of claim 1, wherein the diode lasers include multi emitter laser diodes, laser bars, laser stacks, or fiber lasers (84, 90, 100, 110, 111, 112, 113).

3. The system of claim 1, wherein the first two or more optical elements include a telecentric lens.

4. The system of claim 1, wherein the second two or more optical elements include a telecentric lens.

5. The system of claim 1, wherein the first two or more optical elements include at least one collimating lens.

6. The system of claim 1, wherein the second two or more optical elements include at least one collimating lens.

7. The system of claim 1, wherein the first two or more optical elements include an array of collimating lenses.

8. The system of claim 1, wherein the second two or more optical elements include an array of collimating lenses.

9. The system of claim 1, wherein the first and second group of two or more diode lasers are mounted on a single movable carriage (41).

10. The system of claim 1, wherein the first and second group of two or more diode lasers are mounted on a first (38) and second (39) movable carriage, respectively.

11. The system of claim 1, wherein the radiation from the first group of two or more diode lasers is combined into a single optical path.

12. The system of claim 1, wherein the radiation from the second group of two or more diode lasers is combined into a single optical path.

13. The system of claim 1, wherein the first group of two or more diode lasers is capable of engraving fine details on the flexographic printing plate.

14. The system of claim 1, wherein the second group of two or more diode lasers is capable of engraving broad details on the flexographic printing plate.

## Patentansprüche

1. System zum dreidimensionalen Gravieren von Flexodruckplatten (5), mit:
einer ersten Gruppe (31, 42) aus mindestens zwei Diodenlasern, von denen jeder Laser Strahlung von im Wesentlichen gleicher Intensität abgibt, wobei die Diodenlaser in einem Array (63, 90, 100, 110, 111, 112, 113) angeordnet sind;
mindestens zwei ersten optischen Elementen (54, 61, 91, 92), die mit der ersten Gruppe aus mindestens zwei Diodenlasern gekoppelt sind, um die von der ersten Gruppe aus mindestens zwei Diodenlasern auf eine Flexodruckplatte abgegebene Strahlung abzubilden;
einer zweiten Gruppe (36, 43) aus mindestens zwei Diodenlasern, von denen jeder Laser Strahlung von im Wesentlichen gleicher Intensität abgibt, wobei die Diodenlaser in einem Array (63, 90, 100, 111, 112, 113) angeordnet sind; und
mindestens zwei zweiten optischen Elementen (54, 61, 91, 92), die mit der zweiten Gruppe aus mindestens zwei Diodenlasern gekoppelt sind, um die von der zweiten Gruppe aus mindestens zwei Diodenlasern auf die Flexodruckplatte abgegebene Strahlung abzubilden, wobei sich die Intensität und Punktgröße der ersten Gruppe aus mindestens zwei Diodenlasern von der Intensität und Punktgröße der zweiten Gruppe aus mindestens zwei Diodenlasern unterscheidet und wobei die erste und zweite Gruppe aus Diodenlasern auf einem Schlitten (38, 39, 41) angeordnet sind, der sich entlang der Längsachse einer Drehwalze (30, 45) bewegt, auf der die Flexodruckplatte gelagert ist, und wobei die erste und zweite Gruppe aus Diodenlasern mittels einer Steuervorrichtung (34, 44) derart steuerbar sind, dass sie unabhängig voneinander an unterschiedlichen Orten bezüglich der Drehwalze (30, 45) angeordnet werden können, um in gleichzeitig erfolgendem Betrieb die Flexodruckplatte zu gravieren.

2. System nach Anspruch 1, worin die Diodenlaser Multi-Emitter-Laserdioden, Laserbarren, Laserstapel oder Faserlaser (84, 90, 100, 110, 111, 112, 113) umfassen.

3. System nach Anspruch 1, worin die mindestens zwei ersten optischen Elemente ein telezentrisches Objektiv aufweisen.

4. System nach Anspruch 1, worin die mindestens zwei zweiten optischen Elemente ein telezentrisches Objektiv aufweisen.

5. System nach Anspruch 1, worin die mindestens zwei ersten optischen Elemente mindestens eine Kollimatorlinse aufweisen.

6. System nach Anspruch 1, worin die mindestens zwei zweiten optischen Elemente mindestens eine Kollimatorlinse aufweisen.

7. System nach Anspruch 1, worin die mindestens zwei ersten optischen Elemente eine Anordnung von Kollimatorlinsen aufweisen.

8. System nach Anspruch 1, worin die mindestens zwei zweiten optischen Elemente eine Anordnung von Kollimatorlinsen aufweisen.

9. System nach Anspruch 1, worin die erste und zweite Gruppe aus mindestens zwei Diodenlasern auf einem einzelnen bewegbaren Schlitten (41) angeordnet sind.

10. System nach Anspruch 1, worin die erste und zweite Gruppe aus mindestens zwei Diodenlasern auf einem ersten (38) bzw. zweiten (39) bewegbaren Schlitten angeordnet sind.

11. System nach Anspruch 1, worin die Strahlung der ersten Gruppe aus mindestens zwei Diodenlasern in einem einzelnen optischen Pfad zusammengefasst ist.

12. System nach Anspruch 1, worin die Strahlung der zweiten Gruppe aus mindestens zwei Diodenlasern in einem einzelnen optischen Pfad zusammengefasst ist.

13. System nach Anspruch 1, worin die erste Gruppe aus mindestens zwei Diodenlasern feine Details auf die Flexodruckplatte zu gravieren vermag.

14. System nach Anspruch 1, worin die zweite Gruppe aus mindestens zwei Diodenlasern gröbere Details auf die Flexodruckplatte zu gravieren vermag.

## Revendications

1. Système permettant la gravure en trois dimensions de plaques flexographiques (5), comprenant :
un premier groupe (31, 42) de deux lasers à diode ou plus, émettant chacun un rayonnement ayant sensiblement la même intensité, dans lequel les lasers à diode sont disposés en réseau (63, 90, 100, 110, 111, 112, 113) ;
deux premiers éléments optiques ou plus (54, 61, 91, 92) couplés au premier groupe de deux lasers à diode ou plus pour former une image du rayonnement émis par le premier groupe de deux lasers à diode ou plus sur une plaque flexographique ;
un deuxième groupe (36, 43) de deux lasers à diode ou plus, émettant chacun un rayonnement ayant sensiblement la même intensité, dans lequel les lasers à diode sont disposés en réseau (63, 90, 100, 110, 111, 112, 113) ; et
deux deuxièmes éléments optiques ou plus (54, 61, 91, 92) couplés au deuxième groupe de deux lasers à diode ou plus pour former une image du rayonnement émis par le deuxième groupe de deux lasers à diode ou plus sur la plaque flexographique, dans lequel l'intensité et la taille de spot du premier groupe de deux lasers à diode ou plus sont différentes de l'intensité et de la taille de spot du deuxième groupe de deux lasers à diode ou plus, et dans lequel les premier et deuxième groupes de lasers à diode sont montés sur un chariot (38, 39, 41) qui se déplace le long de l'axe longitudinal d'un cylindre rotatif (30, 45) sur lequel est montée la plaque flexographique, et dans lequel les premier et deuxième groupes de lasers à diode sont contrôlés par un dispositif de commande (34, 44) permettant de les positionner indépendamment les uns des autres en différents emplacements par rapport au cylindre rotatif (30, 45) afin de graver la plaque flexographique par un fonctionnement simultané.

2. Système selon la revendication 1, dans lequel les lasers à diode comprennent des diodes laser multi-émetteurs, des barres de lasers, des piles de lasers ou des lasers à fibre (84, 90, 100, 110, 111, 112, 113).

3. Système selon la revendication 1, dans lequel les deux premiers éléments optiques ou plus contiennent une lentille télécentrique.

4. Système selon la revendication 1, dans lequel les deux deuxièmes éléments optiques ou plus contiennent une lentille télécentrique.

5. Système selon la revendication 1, dans lequel les deux premiers éléments optiques ou plus contiennent au moins une lentille collimatrice.

6. Système selon la revendication 1, dans lequel les deux deuxièmes éléments optiques ou plus contiennent au moins une lentille collimatrice.

7. Système selon la revendication 1, dans lequel les deux premiers éléments optiques ou plus contiennent un réseau de lentilles collimatrices.

8. Système selon la revendication 1, dans lequel les deux deuxièmes éléments optiques ou plus contiennent un réseau de lentilles collimatrices.

9. Système selon la revendication 1, dans lequel les premier et deuxième groupes de deux lasers à diode ou plus sont montés sur un seul chariot mobile (41).

10. Système selon la revendication 1, dans lequel les premier et deuxième groupes de deux lasers à diode ou plus sont montés respectivement sur un premier (38) et un deuxième (39) chariots mobiles.

11. Système selon la revendication 1, dans lequel le rayonnement du premier groupe de deux lasers à diode ou plus est combiné dans un seul trajet optique.

12. Système selon la revendication 1, dans lequel le rayonnement du deuxième groupe de deux lasers à diode ou plus est combiné dans un seul trajet optique.

13. Système selon la revendication 1, dans lequel le premier groupe de deux lasers à diode ou plus est capable de graver de fins détails sur la plaque flexographique.

14. Système selon la revendication 1, dans lequel le deuxième groupe de deux lasers à diode ou plus est capable de graver de gros détails sur la plaque flexographique.
